# EUROPÄISCHE PATENTSCHRIFT

(11) **EP 2 194 300 B1**
(45) Veröffentlichungstag und Bekanntmachung des Hinweises auf die Patenterteilung: **09.11.2011**
(21) Anmeldenummer: 09012014.8
(22) Anmeldetag: 22.09.2009
(51) Int. Cl.: F16K 15/02, F16K 17/04

(54) **Rückschlagventil für eine hydraulische Servolenkung**
Non-return valve for hydraulic power steering
Clapet anti-retour pour une direction assistée hydraulique

(30) Priorität: 03.12.2008 DE 102008060146
(43) Veröffentlichungstag der Anmeldung: 09.06.2010
(73) Patentinhaber: ThyssenKrupp Presta Aktiengesellschaft, 9492 Eschen (LI)
(72) Erfinder: Hölzle, Peter, 73207 Plochingen (DE); Kollmeier, Roger, 70329 Stuttgart (DE); Worringen, Niels, 73734 Esslingen (DE)
(74) Vertreter: Lenzing Gerber Stute

(56) Entgegenhaltungen:
- DE-U1- 20 122 730
- JP-A- 2005 249 154
- US-A- 2 941 629
- US-B2- 7 428 945

## Beschreibung

Die vorliegende Erfindung betrifft ein Rückschlagventil mit den Merkmalen des Oberbegriffs des Anspruchs 1.

Bei hydraulischen Servolenkungen für Kraftfahrzeuge wirkt ein hydraulischer Servomotor auf ein Lenkgetriebe. Fahrbahneinflüsse bewirken während der Fahrt Kräfte, die von den gelenkten Rädern auf die Lenkung zurückwirken. Diese Rückwirkungen äußern sich als Druckimpulse im hydraulischen System.

Um diese Druckimpulse, die gegen die normale Strömungsrichtung des Hydraulikfluids wirken, von anderen Komponenten wie zum Beispiel der Hydraulikpumpe fern zu halten, sind Rückschlagventile zwischen dem hydraulischen Servoantrieb und der Hydraulikpumpe bekannt.

Ein solches Rückschlagventil ist in der Patentschrift US 7,428,945 B2 dargestellt. Das Rückschlagventil weist ein Gehäuse mit einem Ventilsitz auf, in das ein bewegliches

Ventilglied eingesetzt ist. Das bewegliche Ventilglied trägt einen mittigen Ventilkörper, der mit dem Ventilsitz abdichtend zusammen wirkt, sowie drei seitliche Führungsflächen zur Führung des in Axialrichtung verlagerbaren Ventilglieds in dem Ventilgehäuse. Mittig und koaxial zu der Symmetrieachse des Ventils ist eine Schraubenfeder angeordnet, die das Ventil in die geschlossene Stellung vorspannt.

Das bewegliche Ventilglied ist komplex ausgebildet. Es weist zwischen dem mittigen Ventilkörper und den Führungsflächen eine geometrische Gestaltung auf, die dem Hydraulikstrom möglichst wenig Widerstand entgegensetzen soll. Die Feder zur vorspannung des Ventilglieds in die geschlossene Position ist dem Hydraulikstrom ohne eine besondere Führung ausgesetzt. Diese Konstruktion ist deshalb relativ aufwendig und im Betrieb gegen Verformungen der Schraubenfeder anfällig.

Ähnlich komplex ist das in dem US-Patent 3,157,191 offenbarte Rückschlagventil aufgebaut. Hier ist die Schraubenfeder über einen zentrisch angeordneten Zapfen geführt und deshalb weitgehend gegen Verformung geschützt. Das Ventil ist aber an der Niederdruckseite zu einem großen Teil zur Seite, also in Radialrichtung quer zur Strömung offen. Dieses Ventil kann nicht ohne weiteres in Gehäusedurchgangsbohrungen oder Anschlussbohrungen für Hydraulikleitungen eingesetzt werden.

Die DE 29 41 244 C2 zeigt schließlich ein Rückschlagventil, das an der stromabwärts liegenden Niederdruckseite nur in Axialrichtung weisende Öffnungen trägt, so dass dieses Ventil in Durchgangsbohrungen und Leitungsanschlussbohrungen einsetzbar ist. Die Schraubenfeder ist auch über einen Zapfen geführt. Sie steht aber auf der dem Ventilglied abgewandten Grundfläche im Bereich der Durchströmöffnungen auf und kann sich deshalb bei hohen Fluidgeschwindigkeiten in diesem Bereich verformen und in eine der Öffnungen gedrängt werden.

Ähnliche Ventile werden bereits in JP 2005 249 154 oder US 2 941 629 offenbart. Es ist deshalb Aufgabe der vorliegenden Erfindung, ein Rückschlagventil für eine hydraulische Servolenkung zu schaffen, das nur in Axialrichtung durchströmt wird, das einfacher herzustellen und im Betrieb weniger anfällig ist.

Diese Aufgabe wird von einem Rückschlagventil mit den Merkmalen des Anspruchs 1 gelöst.

Weil das Rückschlagventil im wesentlichen rotationssymatetrisch aufgebaut ist und ein Zapfen mittig unter dem beweglichen Ventilglied angeordnet ist, der den Hub des Ventilglieds begrenzt, findet der Anschlag des Ventils im geöffneten zustand nicht im Bereich der Führungsflächen, sondern zentral im Bereich des mit dem Ventilsitz zusammenwirkenden Abschnitts des Ventilglieds statt. Kippbewegungen und Verformungen des Ventilglieds im Bereich der Führungsflächen werden damit ausgeschlossen. Weiter kann das Ventil ohne weiteres in Durchgangsbohrungen eingesetzt werden, weil die Ausströmöffnungen in der als Bodenplatte ausgebildeten Basis nur in Axialrichtung des Ventils offen sind. Schließlich ist auch unter hohen Fluidgeschwindigkeiten eine Verformung der Schraubenfeder in eine der Ausströmöffnungen hinein ausgeschlossen, weil die die Ausströmöffnungen bildenden Ausschnitte der Basis außerhalb der Aufstandsfläche der Schraubenfeder angeordnet sind.

Wenn weiter das bewegliche Ventilglied ein Metallformteil mit gleichförmiger Wandstärke und wenigstens zwei in Umfangsrichtung eine konstante Breite aufweisenden Führungsabschnitten ist, kann dieses Ventilglied als Stanzbiegeteil hergestellt werden. Für das Ventilglied können auch alternativ andere Werkstoffe, z.B. geeignete Kunststoffe oder Verbundwerkstoffe unter Berücksichtigung von kostengünstigen Herstellungsverfahren eingesetzt werden.

Wenn weiter zur Rückstellung des Ventilglieds in die geschlossene Position eine Schraubenfeder vorgesehen ist, die den Zapfen mit geringem spiel umgibt, ist die Schraubenfeder bei geöffnetem Rückschlagventil nahezu über ihre gesamte Länge geführt. Verformungen der Schraubenfeder durch den Hydraulikstrom sind damit ebenso ausgeschlossen.

Wenn der Zapfen einstückig mit einer etwa dreieckigen Basisplatte verbunden ist und diese Basisplatte in dem Ventilgehäuse befestigt ist, ist ein großer Strömungsquerschnitt seitlich neben der Basisplatte in dem Ventilgehäuse möglich. Das Ventilgehäuse kann dabei ein Blechteil sein, das im Bereich der Basisplatte durch Umformung die Basisplatte dauerhaft sichert. Eine besonders vorteilhafte Konfiguration sieht vor, dass das bewegliche Ventilglied vier Führungsflächen aufweist, die in einem Winkelabstand von jeweils 90° bezüglich der Symmetrieachse gleichmäßig über den Umfang verteilt sind.

Schließlich ist es vorteilhaft, wenn bei geschlossenem Rückschlagventil der freie Abstand zwischen dem Zentralbereich des ventilglieds und dem Zapfen geringer ist als der Abstand der freien Enden der Führungsflächen von der Basisplatte, so dass der Anschlag des Ventils in Öffnungsrichtung nicht im Bereich der Führungsflächen erfolgt.

Nachfolgend wird ein Ausführungsbeispiel der vorliegenden Erfindung anhand der Zeichnung beschrieben. Es zeigen:
- Figur 1:: ein erfindungsgemäßes Rückschlagventil in einem Längsschnitt; sowie
- Figur 2:: das Ventil aus Figur 1 in einer Stirnansicht entgegen der Strömungsrichtung.

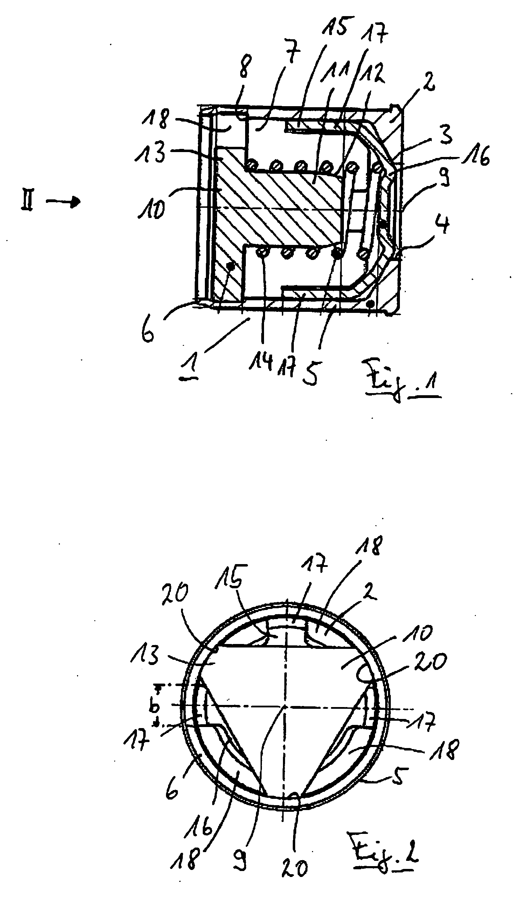

Die Figur 1 zeigt ein Rückschlagventil 1 mit einem rotationasymmetrischen Grundkörper als Ventilgehäuse 2, der beispielsweise als Drehteil gefertigt sein kann. Das Ventilgehäuse 2 weist eine der Hauptströmungsrichtung zugewandte Stirnfläche 3 auf, in die eine zentrische Öffnung 4 eingebracht ist. Wetter weist das Ventilgehäuse 2 eine Wandung 5 auf, die zylindrisch ausgebildet ist. Der Stirnseite 3 gegenüber ist ein freies Ende 6 vorgesehen. Das ventilgehäuse 2 umgibt einen Innenraum 7, der von der Wandung 5 umgeben ist. Die Wandung 5 hat ausgehend von der Stirnfläche 3 zunächst einen Querschnitt mit konstanter Dicke. Dem freien Ende 6 zugewandt ist der Querschnitt von innen vergrößert, so dass sich ein Ringbund 8 im Übergangsbereich von dem kleineren freien Querschnitt zu dem größeren freien Querschnitt ergibt. Im Bereich des größeren freien Querschnitts ist die Wandstärke der Wandung 5 verringert.

Das Ventilgehäuse ist rotationssymmetrisch zu einer Achse 9 ausgebildet.

In das Ventilgehäuse 2 ist ein Führungselement 10 eingesetzt. Das Führungselement 10 umfasst einen der öffnung 4 zugewandten Zapfen 11, der konzentrisch zu der Achse 9 angeordnet ist. An seinem freien Ende weist der Zapfen 11 eine Verjüngung 12 auf. Das der Öffnung 4 zugewandte Ende des Zapfens 11 ist flach und parallel zu der Stirnseite 3 des Ventilgehäuses 2 ausgebildet. An der dem freien Ende 6 des Ventilgehäuses 2 zugewandten Seite weist das Führungselement 10 eine Basis 13 auf, die plattenförmig ausgebildet ist. Die Basis 13 ist etwa dreieckig mit abgerundeten Ecken ausgebildet. Der Zapfen 11 ist mittig auf der Basis 13 angeordnet und bei diesem Ausführungsbeispiel einstückig mit der Basis 13 ausgeführt.

Der Zapfen 11 des Führungselements 10 ist von einer Schraubenfeder 14 konzentrisch umgeben. Die Schraubenfeder 14 liegt einerseits an der Basis 13 des Führungselements 10 an. Sie erstreckt sich von der Basis 13 weg um den Zapfen herum und über das freie Ende des Zapfens 11 hinaus bis zu einem beweglichen ventilglied 15. Das bewegliche Ventilglied 15 ist als Stanzbiegeteil ausgebildet und weist einen Zentralbereich 16 auf, der in der dargestellten geschlossenen Position in Anlage mit dem Rand der Öffnung 4 dichtend anliegt. Ausgehend von dem Zentralbereich 16 sind insgesamt vier Führungselemente 17 vorgesehen, die als Laschen ausgebildet sind und die in Umfangsrichtung eine gleichförmige konstante Breite aufweisen. Die Führungselemente 17 liegen mit ihrer Außenseite als Führungsflächen an der inneren Seite der Wandung 5 des Ventilgehäuses 2 an. Das Ventilglied 15 liegt weiter mit seinem Zentralbereich 16 an dessen der Öffnung 4 abgewandten Seite an der Schraubenfeder 14 an. Die Schraubenfeder 14 spannt das Ventilglied 15 also gegen den Rand der Öffnung 4 und damit in die geschlossene Position vor. Das Ventilglied 15 ist entgegen der Kraft der Schraubenfeder 14 in dem Innenraum 7 des Ventilgehäuses 2 verschieblich in Richtung der Achse 9 angeordnet.

Die Figur 2 zeigt das Rückschlagventil 1 aus Figur 1 in einer Stirnansicht in Richtung des Pfeils II aus Figur 1. Gleiche Bauelemente tragen gleiche Bezugsziffern.

In dieser Darstellung ist die etwa dreieckige Ausbildung der Basis 13 des Führungselements 10 veranschaulicht. Die Basis 13 weist abgerundete Ecken 20 auf, die in ihrem Radius dem inneren Querschnitt des Ventilgehäuses 2 im Bereich des freien Endes 6 angepasst sind. Zur Befestigung der Basis 13 in dem Ventilgehäuse 2 ist der über die Basis 13 hinausstehende, im Querschnitt verjüngte Rand des freien Endes 6 nach innen auf die Achse 9 zu umgeformt. Die Basis 13 liegt im Bereich der abgerundeten Ecken 20 außen an dem Ventilgehäuse 2 an. In Axialrichtung ist sie durch den ringförmigen Bund 8 des Ventilgehäuses 2 einerseits und durch den umgeformten Rand andererseits dauerhaft und unbeweglich gesichert.

Das bewegliche Ventilglied 15 mit den laschenförmigen Führungselementen 17 ist, wie in der Figur 2 dargestellt ebenfalls konzentrisch zu der Achse 9 angeordnet. Die Führungselemente 17 weisen in Umfangsrichtung eine konstante Breite auf, die mit b bezeichnet ist. Zur besseren Führung des Ventilglieds 15 in Richtung der Achse 9 sind die Führungselemente 17 im Kontaktbereich mit der Innenseite der Wandung 5 konvex ausgebildet und weisen den gleichen Krümmungsradius auf, den auch die Wandung 5 an ihrer Innenseite trägt.

Im Betrieb ist das Rückschlagventil 1 in bekannter Weise in die Hydraulikleitung zwischen einer Servopumpe und einem Servoventil eingebaut. Der Hydraulikstrom trifft von der Stirnseite 3 her auf das Rückschlagventil 1 und öffnet entgegen der Rückstellkraft der Schraubenfeder 14 das Ventil durch Abheben des beweglichen Ventilglieds 15 von dem Rand der Öffnung 4, der den Ventilsitz bildet. Das Hydraulikfluid kann dann in der Figur 1 von rechts durch die Öffnung 4 an dem Zentralbereich 16 des Ventilglieds 15 vorbeiströmen. Das Hydraulikfluid tritt dann zwischen den Führungselementen 17 in den Innenraum 7 des Ventilgehäuses 2 ein und durch die freien Bereiche neben der dreieckigen Basis 13 im Bereich des freien Endes 6 wieder aus dem Ventilgehäuse 2 aus. Bei einem starken Hydraulikstrom wird das Ventilglied 15 durch das Führungselement 10 in seinem Hub begrenzt. Die Schraubenfeder 14 liegt dann in voller Länge auf dem Zapfen 11 des Führungselements 10 auf. Auch turbulente, schnelle Strömungen des Hydraulikfluids können die Schraubenfeder 14 dann nicht verformen. Auch das bewegliche Ventilglied 15 ist durch seine Gestaltung der Führungselemente 17 mit konstanter Breite b sehr stabil ausgebildet und gegen Verformung unempfindlich.

Die Ausströmöffnungen 18 sind als etwa dreieckige Ausschnitte in der in der Basis 13 ausgebildet. Sie sind nur in Axialrichtung des Ventils offen, damit eine einfache Anordnung des Ventils in einer Durchgangsbohrung oder sogar in einer Hydraulikleitung selbst möglich ist. Die die Ausströmöffnungen 18 bildenden Ausschnitte der Basis 13 sind außerhalb der Aufstandsfläche der Schraubenfeder 14 angeordnet, damit sich die Schraubenfeder 14 nicht unter dem dynamischen Druck des strömenden Hydraulikfluids in eine der Ausströmöffnungen 18 hinein verformen kann oder sogar durch diese Öffnung in den stromabwärts liegenden Teil des Hydrauliksystems gelangen kann.

Wenn der Abstand zwischen dem freien Ende des Zapfens 11 und dem Zentralbereich 16 kleiner ist als der Abstand zwischen den Führungselementen 17 und der Basis 13, dann erfolgt ein Anschlag des beweglichen Ventilglieds 15 zentrisch unter Aussparung der freien Enden der Führungsflächen 17. Die Führungsflächen 17 werden dann auch dauerhaft nicht verformt.

Ein in Gegenrichtung wirkender Druckimpuls nimmt das bewegliche Ventilglied 15 mit und verschließt damit die Öffnung 4. Eine Rückwirkung eines solchen Druckimpulses auf die Hydraulikpumpe wird dadurch minimiert.

### Bezugeaeichenliste

- 1.: Rückschlagventil
- 2.: Ventilgehäuse
- 3.: Stirnfläche
- 4.: Öffnung
- 5.: Wandung
- 6.: Freies Ende
- 7.: Innenraum
- 8.: Ringbund
- 9.: Achse
- 10.: Führungselement
- 11.: Zapfen
- 12.: Verjüngung
- 13.: Basis
- 14.: Schraubenfeder
- 15.: Ventilglied
- 16.: Zentralbereich
- 17.: Laschenförmige Führungselemente
- 18.: Ausstrdmöffnungen
- 20.: Ecken

## Patentansprüche

1. Rückschlagventil für eine hydraulische Servolenkung, mit einem Ventilgehäuse (2), in das ein bewegliches Ventilglied (15) eingesetzt ist, wobei
das Ventilglied (15) mit einem Ventilsitz abdichtend zusammenwirkt und seitliche Führungselemente (17) zur Führung des Ventilglieds (15) in dem Ventilgehäuse (2) aufweist,
eine Basis (13) vorgesehen ist, die stromabwärts des Ventilglieds (15) liegende Ausströmöffnungen (18) trägt, und mittig und koaxial zu einer Symmetrieachse (9) des Rückschlagventils eine Schraubenfeder (14) angeordnet ist, die das Rückschlagventil in die geschlossene Stellung vorspannt,
**dadurch gekennzeichnet, dass**
die Basis einen mittig in Strömungsrichtung unter dem beweglichen Ventilglied (15) angeordneten Zapfen (11) trägt, der den Hub des Ventilglieds (15) begrenzt, wobei die Schraubenfeder (14) den Zapfen (11) mit geringem Spiel umgibt,
dass die Ausströmöffnungen (18) in der Basis (13) nur in Axialrichtung des Ventils offen sind und
dass die die Ausströmöffnungen (18) bildenden Ausschnitte der Basis (13) außerhalb der Aufstandsfläche der Schraubenfeder (14) angeordnet sind.

2. Rückschlagventil nach Anspruch 1, **dadurch gekennzeichnet, dass** das bewegliche Ventilglied (15) ein Metallformteil mit wenigstens zwei in Umfangsrichtung eine konstante Breite (b) aufweisenden Führungselementen (17) ist.

3. Rückschlagventil nach einem der vorhergehenden Ansprüche, **dadurch gekennzeichnet, dass** die Schraubenfeder (14) bei geöffnetem Rückschlagventil (1) nahezu über ihre gesamte Länge von dem Zapfen (11) geführt ist.

4. Rückschlagventil nach einem der vorhergehenden Ansprüche, **dadurch gekennzeichnet, dass** der Zapfen (11) einstückig mit einer Basis (13) verbunden ist und die Basis (13) in dem Ventilgehäuse (2) derart befestigt ist, dass ein freier Strömungsquerschnitt seitlich neben der Basis (13) in dem Ventilgehäuse (2) ausgebildet ist.

5. Rückschlagventil nach einem der vorhergehenden Ansprüche, **dadurch gekennzeichnet, dass** die Basis (13) in dem Ventilgehäuse (2) durch Umformung des Ventilgehäuses (2) dauerhaft gesichert ist.

6. Rückschlagventil nach einem der vorhergehenden Ansprüche, **dadurch gekennzeichnet, dass** das bewegliche Ventilglied (15) vier Führungsflächen aufweist, die in einem Winkelabstand von jeweils 90° gleichmäßig über den Umfang verteilt sind.

7. Rückschlagventil nach einem der vorhergehenden Ansprüche, **dadurch gekennzeichnet, dass** bei geschlossenem Rückschlagventil der Abstand zwischen dem Zentralbereich (16) des Ventilglieds (15) und dem Zapfen (11) geringer ist als der Abstand der freien Enden der Führungsflächen von der Basis (13), so dass der Anschlag des Ventilglieds (15) in Öffnungsrichtung nicht im Bereich der Führungselemente (15) erfolgt.

## Claims

1. Check valve for a hydraulic power steering system, having a valve body (2), into which a movable valve element (15) is inserted, wherein
the valve element (15) interacts with a valve seat in a sealing manner and has lateral guide elements (17) to guide the valve seat (15) in the valve body (2), a base (13) is provided, which supports discharge openings (18) located downstream from the valve element (15), and a coil spring (14) is arranged centrally and coaxially in relation to an axis of symmetry (9) of the check valve, the coil spring (14) pretensioning the check valve into the closed position,
**characterised in that**
the base supports a projection (11) arranged centrally in the flow direction under the movable valve element (15), the projection (11) limiting the travel of the valve element (15), wherein the coil spring (14) surrounds the projection (11) with little play,
**in that** the discharge openings (18) in the base (13) are only open in the axial direction of the valve, and **in that** the cut-outs of the base (13) forming the discharge openings (18) are arranged outside the contact area of the coil spring (14).

2. Check valve according to Claim 1, **characterised in that** the movable valve element (15) is a formed metal part with at least two guide elements (17) having a constant width (b) in the circumferential direction.

3. Check valve according to any one of the preceding claims, **characterised in that** the coil spring (14) is guided almost over its entire length by the projection (11) when the check valve (1) is open.

4. Check valve according to any one of the preceding claims, **characterised in that** the projection (11) is integrally connected to a base (13) and the base (13) is attached in the valve body (2) in such a way that a free flow cross section is formed laterally next to the base (13) in the valve body (2).

5. Check valve according to any one of the preceding claims, **characterised in that** the base (13) is durably protected in the valve body (2) by deforming the valve body (2).

6. Check valve according to any one of the preceding claims, **characterised in that** the movable valve element (15) has four guide surfaces which are evenly distributed over the circumference at an angular distance of 90° in each case.

7. Check valve according to any one of the preceding claims, **characterised in that** when the check valve is closed the distance between the central area (16) of the valve element (15) and the projection (11) is less than the distance between the free ends of the guide surfaces and the base (13), so that the valve element (15) does not come into contact in the area of the guide elements (15) in the opening direction.

## Revendications

1. Soupape anti-retour pour une direction assistée, hydraulique, comprenant un carter de soupape (2) dans lequel est placé un organe de soupape mobile (15), soupape dans laquelle
l'organe de soupape (15) coopère de manière étanche avec un siège de soupape et présente des éléments de guidage latéraux (17) pour le guidage de l'organe de soupape (15) dans le carter de soupape (2),
il est prévu une base (13) qui porte des ouvertures de sortie d'écoulement (18) situées en aval de l'organe de soupape (15), et un ressort hélicoïdal (14) est agencé de manière centrale et coaxiale à un axe de symétrie (9) de la soupape anti-retour, et assure une précontrainte de la soupape anti-retour dans la position fermée, **caractérisée**
**en ce que** la base porte un tenon (11) agencé de manière centrale, dans la direction d'écoulement sous l'organe de soupape mobile (15), et limitant la course de déplacement de l'organe de soupape (15), le ressort hélicoïdal (14) entourant le tenon (11) avec un faible jeu,
**en ce que** les ouvertures de sortie d'écoulement (18) dans la base (13) ne sont ouvertes que dans la direction axiale de la soupape, et
**en ce que** les encoches de la base (13) formant les ouvertures de sortie d'écoulement (18) sont agencées à l'extérieur de la surface d'appui du ressort hélicoïdal (14).

2. Soupape anti-retour selon la revendication 1, **caractérisée en ce que** l'organe de soupape mobile (15) est une pièce façonnée en métal comportant au moins deux éléments de guidage (17) présentant une largeur constante (b) dans la direction périphérique.

3. Soupape anti-retour selon l'une des revendications précédentes, **caractérisée en ce que** le ressort hélicoïdal (14), pour une soupape anti-retour (1) ouverte, est guidé sur pratiquement la totalité de sa longueur, par le tenon (11).

4. Soupape anti-retour selon l'une des revendications précédentes, **caractérisée en ce que** le tenon (11) est relié d'un seul tenant avec la base (13), et la base (13) est fixée dans le carter de soupape (2) de façon telle qu'une section transversale d'écoulement libre soit formée latéralement à côté de la base (13), dans le carter de soupape (2).

5. Soupape anti-retour selon l'une des revendications précédentes, **caractérisée en ce que** la base (13) est bloquée de manière permanente dans le carter de soupape (2), par déformation du carter de soupape (2).

6. Soupape anti-retour selon l'une des revendications précédentes, **caractérisée en ce que** l'organe de soupape mobile (15) présente quatre surfaces de guidage, qui sont réparties de manière régulière le long de la périphérie, selon un espacement angulaire respectif de 90°.

7. Soupape anti-retour selon l'une des revendications précédentes, **caractérisée en ce que** pour une soupape anti-retour fermée, la distance entre la zone centrale (16) de l'organe de soupape (15) et le tenon (11), est inférieure à la distance des extrémités libres des surfaces de guidage à la base (13), de sorte que la butée de l'organe de soupape (15) dans la direction de l'ouverture ne s'effectue pas dans la zone des éléments de guidage (15).
